# EUROPÄISCHE PATENTANMELDUNG

(11) **EP 2 130 642 A2**
(43) Veröffentlichungstag der Anmeldung: **09.12.2009**
(21) Anmeldenummer: 09159027.3
(22) Anmeldetag: 29.04.2009
(51) Int. Cl.: B23P 19/00

(54) **Verfahren zum Montieren einer Klappe in einem Gehäuse**

(30) Priorität: 06.06.2008 DE 102008027242
(71) Anmelder: Pierburg GmbH, 41460 Neuss (DE)
(72) Erfinder: Simons, Norbert, 40233 Düsseldorf (DE)
(74) Vertreter: Patentanwälte ter Smitten

(57) **Zusammenfassung**

Bekannte Verfahren zum Montieren einer Klappe in einem Gehäuse sind nicht geeignet, eine Leckageminimierung zwischen einem Ventilsitz und einer Verschlussplatte zu erreichen, ohne erhöhten Aufwand betreiben zu müssen.

Daher wird ein Verfahren zum Montieren einer Klappe, die aus einem Klappenkörper (1), der eine im Wesentlichen ebene Verschlussplatte (2) und eine sich im rechten Winkel von einem Ende der Verschlussplatte (2) erstreckende Schulter (3) aufweist, und einer Welle (13), die in einer Bohrung (6) des Gehäuses (5) gelagert ist, besteht, vorgeschlagen, bei dem der Klappenkörper (1) im Gehäuse ausgerichtet wird anschließend die Verschlussplatte (2) gegen eine Sitzfläche (4) im Gehäuse (5) und die Welle (13) gegen die Schulter (3) des Klappenkörpers (1) gedrückt wird und erst in dieser Stellung die Welle (13) an der Schulter (3) des Klappenkörpers (1) verschweißt wird.

Durch eine derartige Ausführung wir ein sicherer Verschluss des zu beherrschenden Kanals erreicht.

## Beschreibung

Die Erfindung betrifft ein Verfahren zum Montieren einer Klappe in einem Gehäuse.

Es sind verschiedene Verfahren zur Montage von Klappen in Gehäusen bekannt. Dabei werden die Klappen häufig erst in das Gehäuse eingesetzt und anschließend mit der Welle verbunden, um ein Verklemmen der Klappen zu vermeiden und die Stellung des Klappenkörpers im Gehäuse zu optimieren.

Wichtig ist eine optimierte Stellung der Klappen im geschlossenen Zustand insbesondere bei Klappen, die einen dichten Verschluss gewährleisten sollen. Hier sind beispielsweise Bypassklappen zu nennen, die in Abgaskühlern benutzt werden, die einen Bypasskanal zur Umgehung des Kühlers aufweisen. Die Klappe beherrscht die Öffnung zum Bypasskanal und wird über pneumatische oder elektromotorische Stellvorrichtungen betätigt.

Die Montage des Klappenkörpers an der Welle erfolgt in bekannten Ausführungen zumeist durch Schweißen. Das Schweißen hat häufig einen Verzug zur Folge, der dazu führt, dass keine dichte Auflage der Klappe auf dem Ventilsitz erreicht wird und somit kein dichter Verschluss erzielt wird, da ein zumindest teilweise umlaufender Spalt entsteht. Durch die entstehenden Leckagen wird jedoch der Wirkungsgrad des Kühlers bei verschlossenem Bypass erheblich beeinträchtigt. Um dies zu vermeiden wurden Versuche mit einer Laserschweißverbindung zwischen Welle und Klappenkörper durchgeführt, um ein Verziehen der Klappe zu vermeiden. Insbesondere bei dynamischen Belastungen kann bei einer derartigen Ausführung jedoch keine Dauerfestigkeit der Verbindung garantiert werden. Eine derartige Befestigung ist jedoch auch aus anderen Anwendungen bekannt.

So ist aus der DE 101 40 410 A1 eine Drosselklappe bekannt, deren Klappenkörper eine Nabe zur Aufnahme der Welle aufweist und der mit einem Schlitz versehen ist, über den die in die Nabe eingeschobene Welle mit dem Klappenkörper verschweißt werden kann. Vor Befestigung des Klappenkörpers an der Welle wird der Klappenkörper im Gehäuse optimal positioniert. Diese Positionierung dient einer Verringerung des umlaufenden Spaltes und verhindert ein Verklemmen der Klappe im Gehäuse bei Öffnung. Ein dichter Verschluss ist durch den umlaufenden Spalt einer Drosselklappe nicht erreichbar.

Des Weiteren ist aus der DE 10 2004 041 880 A1 ein Tumbleklappenverband bekannt, bei dem die Klappenkörper in einer gewünschten Endposition, die der geöffneten Position der Klappen entspricht, mit den Wellenstümpfen verschweißt werden. In dieser Position liegen die Klappenkörper in einer Ausnehmung des Gehäuses an, so dass der Saugkanal möglichst hindernisfrei durchströmt werden kann, so dass möglichst geringe Strömungsverluste entstehen. Ein dichter Verschluss ist nicht erforderlich.

Aus der DE 10 2005 005 190 A1 ist zusätzlich eine Bypassklappe eines Abgaskühlers bekannt, deren Klappenkörper in der den Bypasskanal verschließenden Stellung an der Welle festgeschweißt wird. Die Klappe ist als Umschaltklappe ausgeführt, die mit ihrem von der Welle entfernten Ende gegen das Gehäuse anliegt. Auch mit einer derartigen Klappe ist aufgrund der seitlichen Spalte ein dichter Verschluss des Bypasskanals nicht möglich.

All diese bekannten Verfahren zum Montieren der Klappen im Gehäuse dienen zwar einer möglichst optimierten Positionierung, stellen jedoch keinen dichten Verschluss des zu beherrschenden Kanals sicher.

Es stellt sich daher die Aufgabe, ein Verfahren zum Montieren einer Klappe in einem Gehäuse bereit zu stellen, mit dem ein dichter Verschluss der zu beherrschenden Öffnung und somit des nachfolgenden Kanals sichergestellt wird.

Diese Aufgabe wird durch ein Verfahren gelöst, bei dem die Klappe aus einem Klappenkörper, der eine im Wesentlichen ebene Verschlussplatte und eine sich im rechten Winkel von einem Ende der Verschlussplatte erstreckende Schulter aufweist, und einer Welle besteht, die in einer Bohrung des Gehäuses gelagert ist, wobei im Gehäuse eine Sitzfläche ausgebildet ist, die eine zu einem Kanal führende Öffnung umgibt, die von der Verschlussplatte beherrscht wird, mit folgenden Schritten:
a) Einbringen des Klappenkörpers in das Gehäuse und Auflegen auf die Sitzfläche, wobei die Schulter des Klappenkörpers in Richtung zur Bohrung im Gehäuse zeigt;
b) Ausrichten des Klappenkörpers im Gehäuse, so dass der Klappenkörper mit seinem gesamten Umfang gleichmäßig auf der Sitzfläche aufliegt;
c) Drücken der Verschlussplatte des Klappenkörpers gegen die Sitzfläche im Gehäuse;
d) Einbringen der Welle in die Bohrung;
e) Drücken der Welle gegen die Schulter des Klappenkörpers;
f) Verschweißen der Welle an der Schulter des Klappenkörpers;
g) Entfernen des Drucks von der Welle und dem Klappenkörper nach Abkühlung des Klappenkörpers.

Bei einem derartiges Verfahren wird durch den Druck des Klappenkörpers auf den Ventilsitz beim Schweißvorgang ein Verzug des Klappenkörpers durch den Wärmeeintrag in die Klappe verhindert. Wenn eine Verformung eintritt, so führt diese zu einer zusätzlichen Anpassung der Klappe an die Form des Ventilsitzes, so dass die Dichtigkeit zusätzlich erhöht wird. Die relative Position des Klappenkörpers am Ventilsitz ist einfach einstellbar. Bei der Herstellung der verschiedenen Bauteile kann bezüglich ihrer Längen und Abstände mit großen Toleranzen gefertigt werden, da diese durch die besondere Montage ausgeglichen werden können. Somit entsteht zusätzlich eine besonders kostengünstige Fertigung.

Vorzugsweise wird der Klappenkörper aus Blech durch Stanzen und anschließendes Biegen hergestellt. Somit sind Schulter und Verschlussplatte einstückig hergestellt, so dass auf zusätzliche Befestigungsschritte verzichtet werden kann. Des Weiteren ist die Herstellung aus Blech besonders kostengünstig und eine derartige Klappe ist auch in heißer Umgebung verwendbar.

Das beanspruchte Verfahren erhöht somit bei einer Anwendung für eine Bypassklappe eines Abgaskühlers den Wirkungsgrad des Abgaskühlers erheblich, da ein dichter Verschluss sichergestellt wird. Der Aufwand zur Herstellung und Montage ist im Vergleich zu bekannten Ausführungsformen sehr gering, so dass die Klappe kostengünstig hergestellt werden kann.

Das erfindungsgemäße Verfahren ist in den Figuren dargestellt und wird nachfolgend am Beispiel einer Bypassklappe für einen Abgaskühler beschrieben.

Figur 1 zeigt eine schematische Darstellung des Klappenkörpers in Seitenansicht.

Figur 2 zeigt eine schematische Seitenansicht des Gehäuses mit eingelegtem Klappenkörper in geschnittener Darstellung.

Figur 3 zeigt einen Schnitt entlang der Linie A-A der Figur 1.

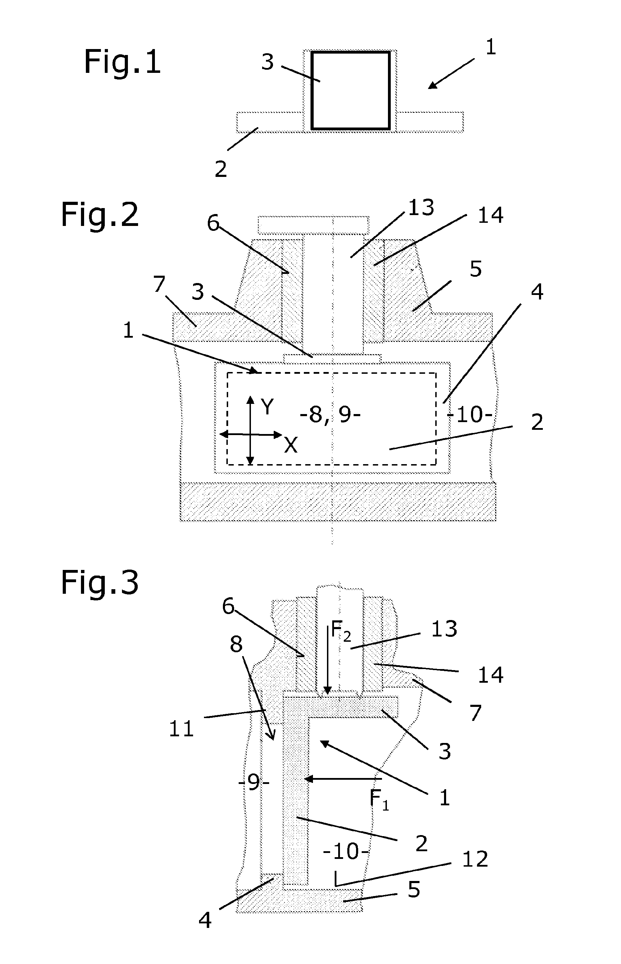

Der in der Figur 1 dargestellte Klappenkörper 1 wird aus Blech hergestellt und weist eine Verschlussplatte 2 und eine Schulter 3 auf, die sich im rechten Winkel zur Verschlussplatte 2 erstreckt.

Der Klappenkörper 1 entsteht durch Ausstanzen aus einer Blechplatte, wobei sich die Schulter 3 noch in einer Ebene mit der Verschlussplatte 2 befindet. Durch anschließende Umformung durch Biegen wird die Schulter 3 in ihre in Figur 1 dargestellte 90° Stellung zur Verschlussplatte 2 gebracht, so dass die Schulter an einem seitlichen Ende der Verschlussplatte2 angeordnet ist.

Der so entstandene Klappenkörper 1 wird, wie in Figur 2 dargestellt, auf eine Sitzfläche 4 aufgelegt, die in einem Gehäuse 5 angeordnet ist. Dabei zeigt die Schulter 3 des Klappenkörpers 1 in Richtung einer Bohrung 6, die als Durchgangsbohrung ausgeführt ist und sich radial durch eine Gehäusewand 7 erstreckt. Die Sitzfläche 4 umschließt eine Öffnung 8 eines Kanals 9, der beispielsweise als Bypasskanal dient, der wiederum senkrecht vom im Gehäuse 5 ausgebildeten Hauptkanal 10 abzweigt. Die Sitzfläche 4 kann durch das in den Hauptkanal 10 ragende Ende des Bypasskanals 9 gebildet werden oder als separater umlaufender Vorsprung 11 an einer Innenwand 12 des Bypasskanals 9 ausgebildet werden.

Auf der Sitzfläche 4 wird der Klappenkörper 1 anschließend optimal positioniert, so dass eine möglichst gleich breite Auflagefläche der Verschlussplatte 2 auf der Sitzfläche 4 über den gesamten Umfang erreicht wird. Zur Positionierung stehen zwei Freiheitsgrade zur Verfügung, die durch die Pfeile X und Y in der Figur 2 dargestellt sind.

Nach der Positionierung auf der Ebene der Sitzfläche 4 wird eine Welle 13 beziehungsweise ein Wellenstumpf 13 in die Bohrung 6 im Gehäuse 5 unter Zwischenlage einer Lagereinheit 14 eingesetzt, die ebenfalls lediglich schematisch dargestellt ist und beispielsweise aus einem oder mehreren Gleit- oder Wälzlagern bestehen kann.

Zur Befestigung der Welle 13 an dem Klappenkörper 1 wird zunächst der Klappenkörper 1 in seiner optimierten Stellung durch eine senkrecht auf die Verschlussplatte 2 aufzubringende Kraft F₁ auf die Sitzfläche 4 gedrückt. Die aufzubringende Kraft ist durch den Pfeil in der Figur 3 dargestellt. Anschließend wird die Welle 13 in Achsrichtung der Welle 13 durch eine zweite Kraft F₂ gegen die Schulter 3 des Klappenkörpers 1 belastet, wobei diese zweite Kraft F₂ nicht größer sein darf als die Haltekraft, welche durch das Belasten der Verschlussplatte 2 in Richtung der Sitzfläche 4 entsteht.

In dieser Stellung unter Einwirkung der beiden Kräfte F₁ und F₂ wird daraufhin die Welle 13 an der Schulter 3 und somit am Klappenkörper 1 verschweißt. Die Kräfte F₁ und F₂ sollten bis zur Abkühlung des Klappenkörpers 1 und der Welle 13 gehalten werden, um ein nachträgliches Verziehen während der Abkühlung zu vermeiden.

Durch dieses Verfahren wird sichergestellt, dass die Klappe im Gehäuse 5 mit der gesamten Auflagefläche der Verschlussplatte 2 gleichmäßig auf der Sitzfläche 4 aufliegt, wodurch Leckagen im Betrieb zuverlässig minimiert werden und bei der Verwendung als Bypassklappe eines Kühlers der Wirkungsgrad des Kühlers deutlich verbessert werden kann.

Es sollte deutlich sein, dass das beschriebene Verfahren auch für andere Klappen genutzt werden kann, bei denen auf einfache Weise ein leckagefreies Verschließen eines Kanals erreicht werden soll. Selbstverständlich ist es auch erforderlich, die Bohrung zur Aufnahme der Welle entsprechend abzudichten, um auch hier Leckagen zu vermeiden. Zur Abdichtung der Lagerstellen von Klappen sind verschiedene Ausführungen bekannt, denen sich der Fachmann bedienen kann.

Selbstverständlich ist der Schutzbereich nicht auf die beschriebene und gezeigte Ausführungsform beschränkt. Es sind verschiedene Klappenformen und Verfahren zur Herstellung von Klappenkörpern bekannt, bei denen die Klappenkörper im Sinne des Hauptanspruchs montiert werden können. Auch ist es beispielsweise möglich, die Welle zu einem früheren Zeitpunkt in die Bohrung einzusetzen, ohne sie zu diesem Zeitpunkt gegen die Schulter zu belasten.

## Patentansprüche

1. Verfahren zum Montieren einer Klappe in einem Gehäuse (5),
wobei die Klappe aus einem Klappenkörper (1), der eine im Wesentlichen ebene Verschlussplatte (2) und eine sich im rechten Winkel von einem Ende der Verschlussplatte (2) erstreckende Schulter (3) aufweist, und
einer Welle (13), die in einer Bohrung (6) des Gehäuses (5) gelagert ist, besteht
und im Gehäuse (5) eine Sitzfläche (4) ausgebildet ist, die eine zu einem Kanal (9) führende Öffnung (8) umgibt, die von der Verschlussplatte (2) beherrscht wird,
mit folgenden Schritten:
a) Einbringen des Klappenkörpers (1) in das Gehäuse (5) und Auflegen auf die Sitzfläche (4), wobei die Schulter (3) des Klappenkörpers (1) in Richtung zur Bohrung (6) im Gehäuse (5) zeigt;
b)Ausrichten des Klappenkörpers (1) im Gehäuse (5), so dass der Klappenkörper (1) mit seinem gesamten Umfang gleichmäßig auf der Sitzfläche (4) aufliegt;
c) Drücken der Verschlussplatte (2) des Klappenkörpers (1) gegen die Sitzfläche (4) im Gehäuse (5);
d) Einbringen der Welle (13) in die Bohrung (6);
e) Drücken der Welle (13) gegen die Schulter (3) des Klappenkörpers (1);
f) Verschweißen der Welle (13) an der Schulter (3) des Klappenkörpers (1);
g) Entfernen des Drucks von der Welle (13) und dem Klappenkörper (1) nach Abkühlung des Klappenkörpers (1).

2. Verfahren zum Montieren einer Klappe in einem Gehäuse nach Anspruch 1,
**dadurch gekennzeichnet, dass**
der Klappenkörper (1) aus Blech durch Stanzen und anschließendes Biegen hergestellt wird.
